# EUROPEAN PATENT APPLICATION

(11) **EP 3 301 576 A1**
(43) Date of publication of application: **04.04.2018**
(21) Application number: 17188305.1
(22) Date of filing: 29.08.2017
(51) Int. Cl.: G06F 11/07, G06F 11/34

(54) **METHOD AND APPARATUS FOR MONITORING LOGS OF MULTI-TENANT SYSTEMS**

(30) Priority: 29.09.2016 JP 2016191947
(71) Applicant: FUJITSU LIMITED, Kanagawa 211-8588 (JP)
(72) Inventor: Nagata, Akira, Kanagawa, 211-8588 (JP); Ohta, Satoshi, Kanagawa, 211-8588 (JP); Ishihara, Shun, Kanagawa, 211-8588 (JP)
(74) Representative: Hoffmann Eitle

(57) **Abstract**

A disclosed log monitoring method includes: receiving identification information of a user among a plurality of users and execution log data for software associated with the user; obtaining a detection condition associated with the received identification information from a storage that stores detection conditions each of which is associated with identification information of a user; determining whether the received execution log data satisfies the obtained detection condition; and outputting a result of the determining.

## Description

This invention relates to a technique for monitoring logs.

As cloud service becomes popular, systems are built in which resources are shared by plural users (for example, companies). Such a system is called a multi-tenant system. For example, a document discloses a multi-tenant system in which resources of a service providing apparatus are shared by plural users.

In the multi-tenant system, functions such as "logmanagement" and "abnormality detection" that are common to an application layer and a middleware layer of each user are provided as PaaS (Platform as a Service). As software for providing these functions, for example, Zabbix that is OSS (Open Source Software) is known.

However, this software is designed on a premise that the aforementioned functions are provided under an environment in which scaling out is not performed, for example, the same DB (Database) cannot be shared. And it is impossible to distribute loads when the number of users increases. Therefore, VMs (Virtual Machine) are allocated for each user by a single tenant method, and costs for providing the above functions may become high in some cases.

Patent Document 1: Japanese Laid-open Patent Publication No. 2012-113380

In one aspect, an object of this invention is to provide a technique to realizemonitoringexecution logs of software in a scalable form, in a system in which plural users use the software.

A log monitoring method related to this invention includes: receiving identification information of a user among a plurality of users and execution log data for software associated with the user; obtaining a detection condition associated with the received identification information from a storage that stores detection conditions each of whichisassociated withidentificationinformation of a user; determining whether the receivedexecution logdata satisfies the obtained detection condition; and outputting a result of the determining.

Reference will now be made, by way of example, to the accompanying Drawings, in which:
Fig. 1 is a diagram depicting an outline of a multi-tenant system in this embodiment;
Fig. 2 is a hardware configuration diagram of an information processing apparatus;
Fig. 3 is a functional block diagram of the information processing apparatus;
Fig. 4 is a functional block diagram of a monitoring apparatus;
Fig. 5 is a functional block diagram of a management apparatus;
Fig. 6 is a diagram depicting a processing flow of processing executed by the information processing apparatus;
Fig. 7A is a diagram depicting an example of an execution log;
Fig. 7B is a diagram depicting an example of the execution log;
Fig. 8 is a diagram depicting an example of a tenant table;
Fig. 9A is a diagram depicting an example of the execution log with GUID;
Fig. 9B is a diagram depicting an example of the execution log with GUID;
Fig. 10 is a diagram depicting a processing flow of processing executed by a monitoring apparatus;
Fig. 11 is a diagram depicting an example of a monitoring VM table;
Fig. 12 is a diagram depicting a processing flow of processing executed by a load balancer of the information processing apparatus;
Fig. 13 is a diagram depicting a processing flow of processing executed by the monitoring apparatus;
Fig. 14 is a diagram depicting an example of a trigger definition table;
Fig. 15 is a diagram depicting an example of a monitoring definition table;
Fig. 16 is a diagram depicting a processing flow of processing executed by the information processing apparatus;
Fig. 17 is a diagram depicting a processing flow of processing executed by the management apparatus;
Fig. 18 is a diagram depicting a processing flow of processing executed by the monitoring apparatus;
Fig. 19 is a diagram depicting a processing flow of processing executed by the monitoring apparatus;
Fig. 20 is a diagram depicting a processing flow of processing executed by the management apparatus;
Fig. 21 is a diagram depicting a processing flow of processing executed by the monitoring apparatus; and
Fig. 22 is a functional block diagram of a computer.

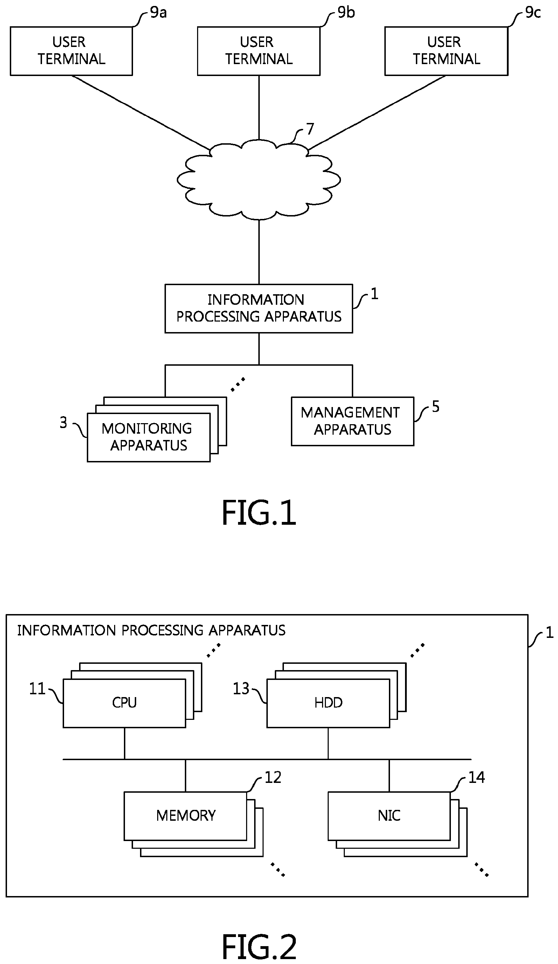

Fig. 1 is a diagram depicting an outline of a multi-tenant system in this embodiment. An information processing apparatus 1 for providing a cloud service is connected to, for example, a network 7 which is the Internet. User terminals 9a to 9c transmit a request to the information processing apparatus 1 via the network 7 and use cloud service provided by the information processing apparatus 1. One or more monitoring apparatuses 3 detect abnormalities that have occurred in the information processing apparatus 1 and notify users of the detected abnormalities. A management apparatus 5 manages one or more monitoring apparatuses 3. In Fig. 1, the number of user terminals is three, but the number is not limited.

Fig. 2 is a hardware configuration diagram of the information processing apparatus 1. The information processing apparatus 1 includes one or more CPUs (Central Processing Units) 11, one or more memories 12 which are, for example, DRAMs (Dynamic Random Access Memories), one or more HDDs (Hard Disk Drives) 13, and one or more NICs (Network Interface Cards) 14. The hardware components are connected with each other by a bus.

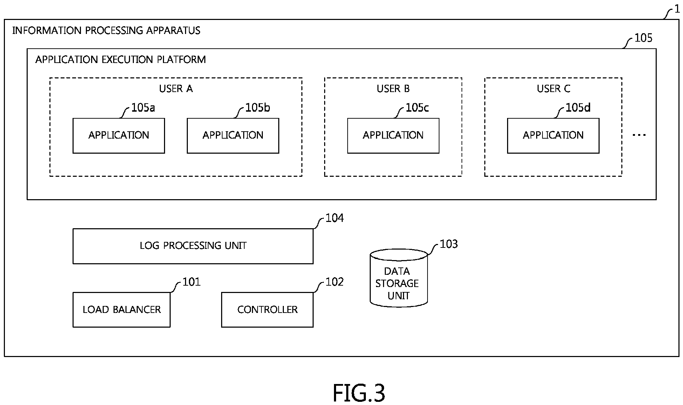

A program for executing processing of this embodiment is stored in the HDD 13, loaded in the memory 12, and executed by the CPU 11, and enables various functions as illustrated in Fig. 3. Fig. 3 is a functional block diagram of the information processing apparatus 1. The information processing apparatus 1 includes a load balancer 101, a controller 102, a data storage unit 103, a log processing unit 104, and an application execution platform 105. On the application execution platform 105, the applications 105a to 105d are executed. By operating the user terminal, the user can use the application on the application execution platform 105 provided as PaaS. In Fig. 3, the applications 105a and 105b are executed as applications for a user A, the application 105c is executed as the application for a user B, and the application 105d is executed as the application for a user C.

The applications 105a to 105d output execution logs including information on execution. The log processing unit 104 collects the execution logs outputted by the applications 105a to 105d and transfers them to the load balancer 101. The load balancer 101 allocates the execution logs received from the log processing unit 104 to enable loads of VMs 30 running on one or more monitoring apparatuses 3 to be leveled. Identification information (GUID (Globally Unique IDentifier)) of a user of an application that has outputted an execution log is attached to the execution log. The controller 102 is an end point to be accessed when definition data including data of conditions for abnormality detection is registered, changed or deleted, and transfers the definition data received from the user terminal to the management apparatus 5. A GUID of a user who requests update of the definition data is attached to the definition data. The controller 102 authenticates a user terminal based on a token to enable the authorized user terminal to register the definition data and the like. In the data storage unit 103, a tenant table and a monitoring VM table are stored.

Since the hardware configuration of the monitoring apparatus 3 is the same as that of the information processing apparatus 1, the explanation is omitted.

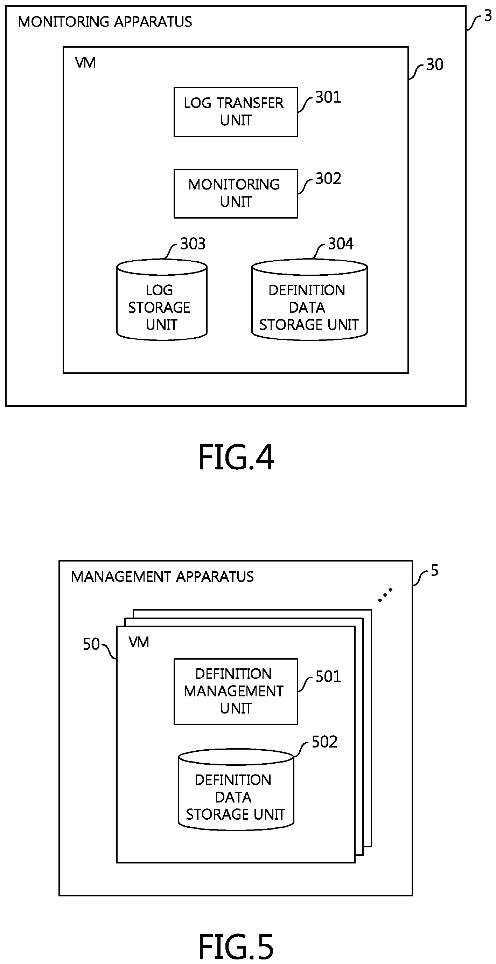

Fig. 4 is a functional block diagram of the monitoring apparatus 3. The monitoring apparatus 3 is executing the VM 30, and the VM 30 includes a log transfer unit 301, a monitoring unit 302, a log storage unit 303, and a definition data storage unit 304. Although the number of VMs 30 is 1 here, two or more VMs 30 may be executed in each monitoring apparatus 3.

The log transfer unit 301 transfers execution logs received from the load balancer 101 of the information processing apparatus 1 to the monitoring unit 302. The log transfer unit 301 temporarily stores the execution logs in the buffer, and sends the execution logs to the monitoring unit 302 when a state of the monitoring unit 302 is not an abnormal state (for example, a state in which operation of the monitoring unit 302 is stopped) . When the state of the monitoring unit 302 is the abnormal state, the execution log is returned to the load balancer 101. The monitoring unit 302 detects abnormality of the applications based on the execution logs received from the log transfer unit 301 and the definition data stored in the definition data storage unit 304. In the log storage unit 303, execution logs after the processing by the monitoring unit 302 is completed are stored. In the definition data storage unit 304, definition data of all users who use the applications is stored.

Fig. 5 is a functional block diagram of the management apparatus 5. The management apparatus 5 is executing VMs 50, and the VMs 50 includes a definition management unit 501 and a definition data storage unit 502. The VMs 50 are redundant, and the processing related to this embodiment is executed by a primary VM 50. Since redundancy is well known, we will not discuss it further here.

The definition management unit 501 updates definition data stored in the definition data storage unit 304 of each monitoring apparatus 3, based on the definition data stored in the definition data storage unit 502. In the definition data storage unit 502, definition data received from the controller 102 is stored.

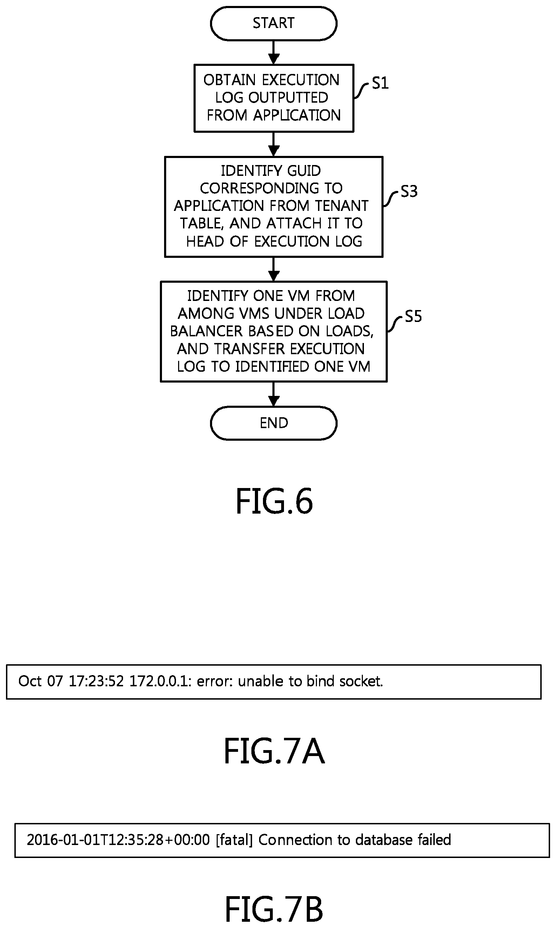

Next, with reference to Figs. 6 to 21, processing executed in the system of this embodiment will be described.

First, with reference to Figs. 6 to 9B, processing executed by the information processing apparatus 1 with respect to execution logs outputted from the applications 105a to 105d will be described.

The log processing unit 104 of the information processing apparatus 1 obtains execution logs outputted from one of the applications 105a to 105d (Fig. 6: step S1).

Figs. 7A and 7B are diagrams depicting an example of an execution log. Both of Fig. 7A and Fig. 7B illustrate an example of an execution log, and the execution log includes information on a date and time and information on an execution state of an application.

The log processing unit 104 identifies a GUID of a user of an application that has outputted an execution log from the tenant table stored in the data storage unit 103. Then, the log processing unit 104 attaches the identified GUID to the head of the received execution log (step S3).

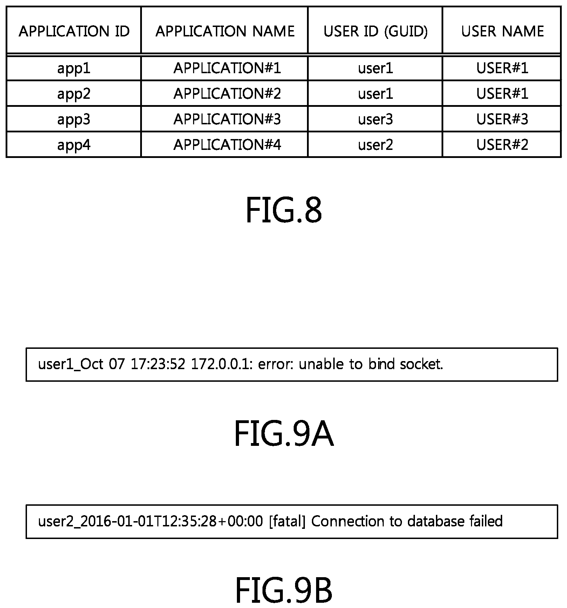

Fig. 8 is a diagram depicting an example of a tenant table. In the example of Fig. 8, an application ID, an application name, a GUID of a user of the application, and a user name are stored.

Figs. 9A and 9B are diagrams depicting an example of an execution log to which a GUID is added. Fig. 9A depicts an execution log in a case where a GUID is attached to the execution log illustrated in Fig. 7A, Fig. 9B illustrates an execution log in a case where a GUID is attached to the execution log illustrated in Fig. 7B.

The log processing unit 104 outputs, to the load balancer 101, the execution log to which the GUID is attached. Then, the load balancer 101 identifies a VM 30 from among the VMs 30 under the load balancer 101 (that is, the VMs 30 to which execution logs are allocated from the load balancer 101) based on loads of the VMs 30. As described above, the VM 30 to which the execution log is allocated is identified so that loads of the VMs 30 are leveled. Then, the load balancer 101 transfers the execution log to which the GUID is attached in the step S3 to the identified VM 30 (step S5). Then, the processing ends.

By executing the aforementioned processing, it becomes possible to identify a user who uses an application that outputted an execution log.

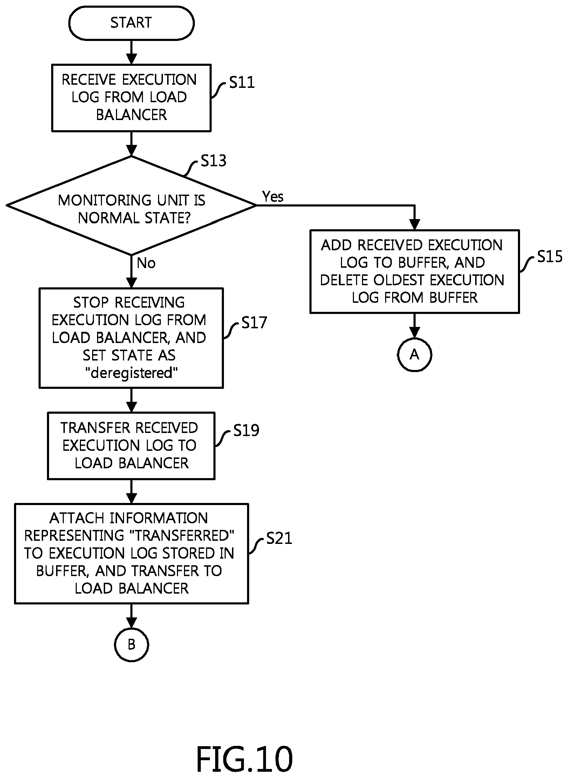

With reference to Figs. 10 to 15, processing executed by the monitoring apparatus 3 with respect to execution logs outputted from the applications 105a to 105d will be described.

The log transfer unit 301 of the monitoring apparatus 3 receives an execution log from the load balancer 101 (step S11).

The log transfer unit 301 determines whether a state of the monitoring unit 302 is a normal state (step S13).

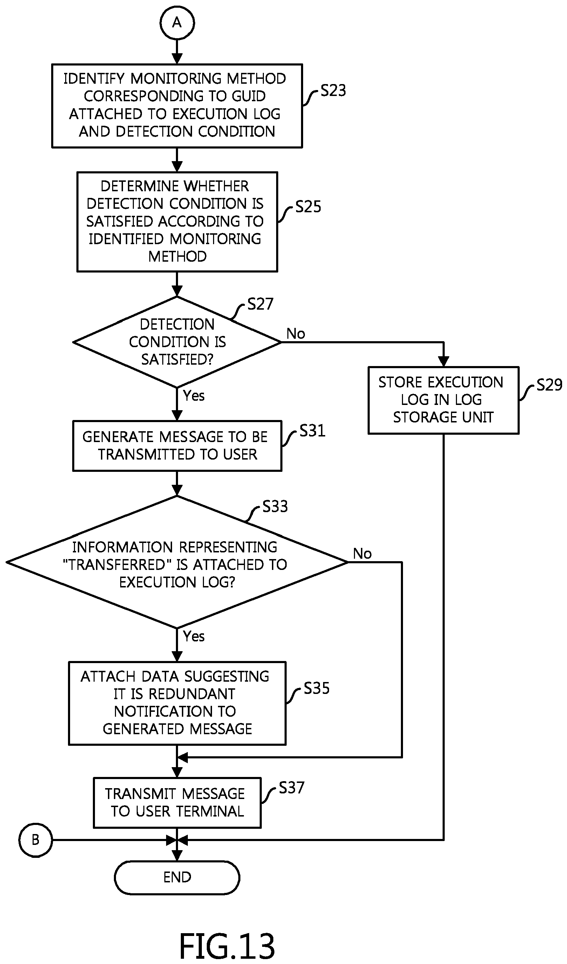

When the state of the monitoring unit 302 is the normal state (step S13 : Yes route), the log transfer unit 301 executes the following processing. Specifically, the log transfer unit 301 outputs the received execution log to the monitoring unit 302. In addition, the log transfer unit 301 adds a copy of the received execution log to the buffer managed by the log transfer unit 301, and deletes the oldest execution log among execution logs stored in the buffer from the buffer (step S15) . A predetermined number of execution logs or a predetermined amount of execution logs are stored in the buffer. Then, the processing shifts to step S23 in Fig. 13 via terminal A.

On the other hand, when the state of the monitoring unit 302 is not the normal state (step S13: No route), the log transfer unit 301 executes the following processing. Specifically, the log transfer unit 301 stops receiving execution logs from the load balancer 101. For example, a request to stop allocation of execution logs is sent from the log transfer unit 301 to the load balancer 101. Then, the log transfer unit 301 sets a state as "deregistered" with respect to a record of the VM 30 that has received the execution log in step S11 among records of the monitoring VM table stored in the data storage unit 103 (step S17).

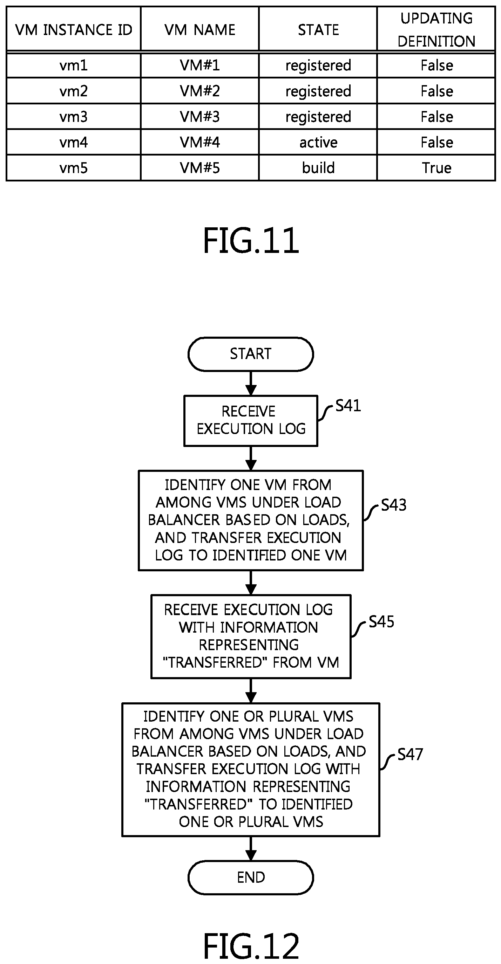

Fig. 11 is a diagram depicting an example of the monitoring VM table. In the example of Fig. 11, a VM instance ID, a VM name, information representing a state, and information representing whether or not definition data is being updated are stored. When the state is "build", the VM30 is being deployed. When the state is "active", deployment of the VM 30 has been completed. When the state is "registered", the VM 30 is connected to the load balancer 101 and is ready to receive execution logs. When the state is "deregistered", the VM 30 is not connected to the load balancer 101 and cannot receive execution logs. When the state is "empty", there are no accumulated execution logs. In step S17, a command to change contents of the monitoring VM table is transmitted from the monitoring apparatus 3 to the information processing apparatus 1, and the information processing apparatus 1 change the contents of the monitoring VM table according to the command.

The log transfer unit 301 transfers the execution log received in step S11 to the load balancer 101 (step S19). Since the execution log cannot be processed in the VM 30 that received the execution log in step S11, the execution log is returned to the load balancer 101.

The log transfer unit 301 attaches information representing "transferred" to each execution log stored in the buffer, and transfers the execution logs to the load balancer 101 (step S21) . Although the execution logs stored in the buffer are execution logs that have already been outputted to the monitoring unit 302, the execution logs are returned to the load balancer 101 since there is a possibility that the state of the monitoring unit 302 is an abnormal state and processing has not been properly performed. Then, the processing shifts to the explanation of Fig. 13 via terminal B, and the processing ends.

Here, with reference to Fig. 12, processing executed by the load balancer 101 that has received the returned execution log will be described.

The load balancer 101 receives the execution logs transferred in step S19 from the VM 30 to which the execution logs were allocated (Fig. 12: step S41).

The load balancer 101 identifies one VM 30 from among the VMs 30 under the load balancer 101 based on loads, and transfers the execution logs received in step S41 to the identified VM 30 (step S43). Since the processing of step S17 has been executed, the VM 30 that returned the execution logs is not identified.

The load balancer 101 receives the execution logs to which information representing "transferred" is attached, from the VM 30 to which the execution logs were allocated (step S45).

The load balancer 101 identifies one or more VMs 30 from among the VMs 30 under the load balancer 101 based on loads, and transfers the execution logs received in step S45 to the identified one or more VMs 30 (step S47). Since the processing of step S17 was executed, the VM 30 that returned the execution logs is not specified. Then, the processing ends.

By executing processing as described above, it becomes possible to prevent failing to monitor some execution logs.

Shifting to the explanation of Fig. 13, the monitoring unit 302 that received an execution log from the log transfer unit 301 identifies a monitoring method that corresponds to a GUID attached to the execution log from a trigger definition table stored in the definition data storage unit 304. In addition, the monitoring unit 302 identifies a detection condition that corresponds to the GUID attached to the execution log from a monitoring definition table stored in the definition data storage unit 304 (Fig. 13: step S23).

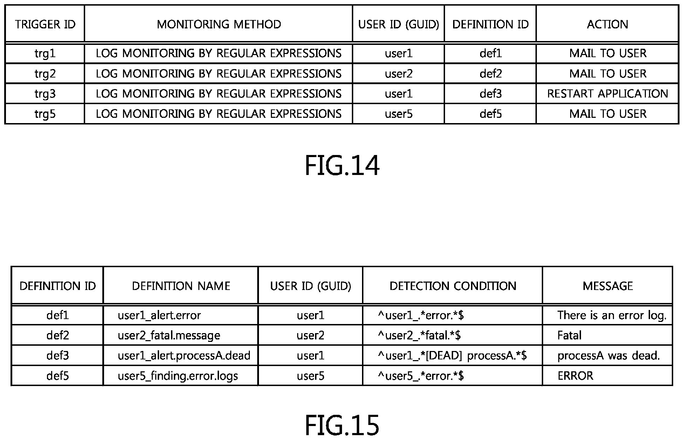

Fig. 14 is a diagram depicting an example of the trigger definition table. In the example of Fig. 14, a trigger ID, information representing a monitoring method, a GUID, a definition ID, and information representing an action to be executed when a detection condition is satisfied are stored. In the following explanation, notifying an e-mail is performed as the action, but as illustrated in Fig. 14, restarting the application or the like may be executed.

Fig. 15 is a diagram depicting an example of the monitoring definition table. In the example of Fig. 15, a definition ID, a definition name, a GUID, a detection condition, and a message notified by e-mail are stored. In this embodiment, the detection condition is created in advance by the user in a form of "^ [GUID]_. * [arbitrary character string defined by user]. * $". However, other forms may be used.

The monitoring unit 302 determines, according to the monitoring method specified in step S23, whether the detection condition specified in step S23 is satisfied (step S25) . When plural detection conditions are identified in step S23, the monitoring unit 302 determines whether each of the plural detection conditions is satisfied.

When the detection condition is not satisfied (step S27: No route), the monitoring unit 302 stores the execution log in the log storage unit 303 (step S29). Then, the processing ends.

When the detection condition is satisfied (step S27 : Yes route), the monitoring unit 302 generates a message to be transmitted to the user terminal based on data stored in the monitoring definition table (step S31).

The monitoring unit 302 determines whether information representing "transferred" is attached to the execution log received from the log transfer unit 301 (step S33).

When the information representing "transferred" is not attached to the execution log (step S33: No route), the processing shifts to step S37. On the other hand, when the information representing "transferred" is attached to the execution log (step S33: Yes route), the monitoring unit 302 executes the following processing. Specifically, the monitoring unit 302 attaches data suggesting it is a redundant notification to the message generated in step S31 (step S35). If information representing "transferred" is attached, there is a possibility that a notification has already been made by another monitoring unit 302, and the processing of step S35 is executed.

The monitoring unit 302 transmits an e-mail including the generatedmessage to a user terminal of the user who uses the application that outputted the execution log (step S37). Then, the processing ends. The user may be notified by another output means (for example, a printer) instead of an e-mail. In addition, a notification may be given to an administrator of the multi-tenant system.

As described above, since a GUID is attached to both the definition data and the execution log, it becomes possible to determine whether or not an abnormality has occurred in the application for each user. Since each VM 30 can execute monitoring for all users, it becomes possible to reduce costs as compared with a case of preparing a VM for each user.

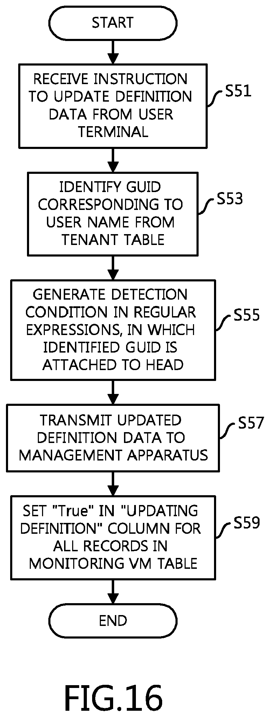

With reference to Fig. 16, processing executed by the information processing apparatus 1 regarding update of definition data will be explained.

The controller 102 of the information processing apparatus 1 receives an instruction to update definition data from one of the user terminals 9a to 9c (Fig. 16: step S51) . The instruction to update definition data includes, for example, information on the detection condition after the update.

The controller 102 identifies a GUID corresponding to a user name of a user terminal that transmitted the instruction to update definition data, from the tenant table stored in the data storage unit 103 (step S53).

The controller 102 generates, based on the instruction received in the step S51, a detection condition in regular expressions, to the head of which the GUID identified in step S53 is attached (step S55).

The controller 102 transmits the updated definition data including the detection condition generated in step S55 to the management apparatus 5 (step S57).

For all records in the monitoring VM table stored in the data storage unit 103, the controller 102 sets "True" in the "updating definition" column (step S59). Then, the processing ends.

By executing the aforementioned processing, it becomes possible to enable the management apparatus 5 to manage a detection condition to which a GUID is attached.

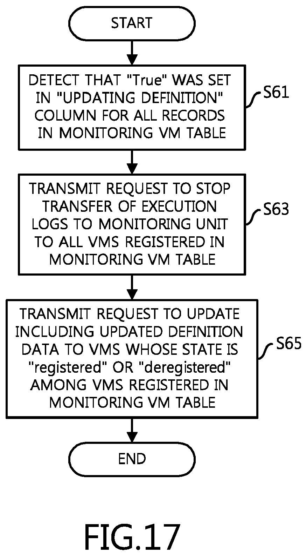

With reference to Figs. 17 to 21, processing executed by the management apparatus 5 and processing executed by the monitoring apparatus 3 with respect to update of the definition data will be described.

The definitionmanagement unit 501 in the management apparatus 5 detects that "True" was set in the "updating definition" column for all records in the monitoring VM table (Fig. 17: step S61). For example, the definition management unit 501 transmits, to the information processing apparatus 1, a request to transmit contents of the monitoring VM table at predetermined time intervals, and then confirms that "True" is set in the "updating definition" column.

The definition management unit 501 transmits a request to stop transfer of execution logs to the monitoring unit 302 to all VMs 30 registered in the monitoring VM table (step S63) . The processing executed by the VM 30 that received the request to stop transfer of execution logs will be described later.

The definition management unit 501 transmits a request to update, which includes updated definition data, to the VM 30 whose state is "registered" or "deregistered" among the VMs 30 registered in the monitoring VM table (step S65). It is assumed that the updated definition data is received from the information processing apparatus 1 and stored in the definition data storage unit 502. Then, the processing ends. Since the definition data of the VM 30 whose state is "deregistered" is also updated, the processing is performed by using the updated definition data even for execution logs remaining in the buffer of the VM 30 for which transfer of execution logs from the load balancer 101 has not already been performed.

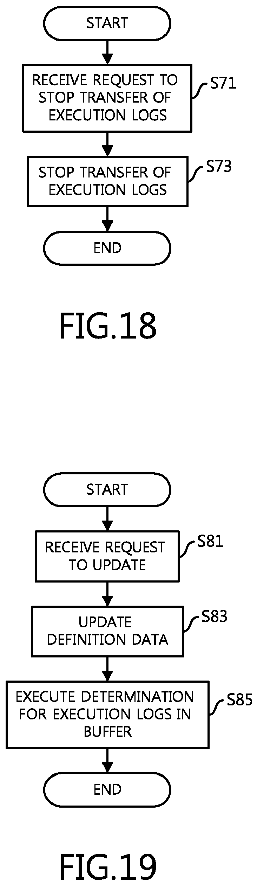

With reference to Fig. 18, processing executed by the monitoring apparatus 3 that has received the request to stop transfer of execution logs will be described.

The log transfer unit 301 of the VM 30 in the monitoring apparatus 3 receives the request to stop transfer of execution logs, which has been transmitted by the management apparatus 5 in step S63 (Fig. 18: step S71).

The log transfer unit 301 stops transmitting execution logs to the monitoring unit 302 (step S73). Thereafter, the log transfer unit 301 stores execution logs received from the load balancer 101 in the buffer until the transfer is restarted. Then, the processing ends.

By executing the aforementioned processing, monitoring by the monitoring unit 302 is not performed until the transfer is resumed, and processing is not performed for execution logs with the definition data before update. It becomes possible to prevent erroneous notification or failure to detect by monitoring using the definition data before update from occurring.

With reference to Fig. 19, processing executed by the monitoring apparatus 3 that has received the request to update definition data will be described.

The log transfer unit 301 of the VM 30 in the monitoring apparatus 3 receives the request to update definition data, which was transmitted by the management apparatus 5 in step S65 (Fig. 19: step S81).

The log transfer unit 301 updates the definition data stored in the definition data storage unit 304 with the updated definition data included in the request to update definition data (step S83).

The log transfer unit 301 transfers execution logs stored in the buffer to the monitoring unit 302. The monitoring unit 302 then uses the definition data stored in the definition data storage unit 304 for the execution logs received from the log transfer unit 301 to determine whether or not the detection condition is satisfied (step S85) . As a result, the execution logs stored in the buffer is also processed with the updated definition data.

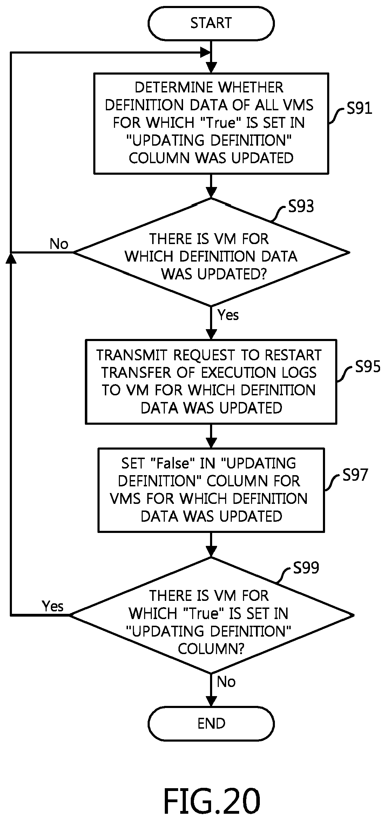

With reference to Fig. 20, processing in which the management apparatus 5 confirms update status of the definition data will be described.

The definition management unit 501 in management apparatus 5 determines whether or not definition data of all the VMs 30 for which "True" is set in the "updating definition" column has been updated (Fig. 20: step S91). In step S91, a determination is made based on whether or not the definition data stored in the definition data storage unit 502 matches the definition data stored in the definition data storage unit 304 of each VM 30. The definition data of each VM 30 is obtained by the definition management unit 501 transmitting the request to transmit contents of the definition data storage unit 304 to each monitoring apparatus 3 at a predetermined time interval.

The definition management unit 501 determines whether there is the VM 30 for which the definition data has been updated (step S93) . When there is no VM 30 for which the definition data has been updated (step S93: No route), the processing returns to step S91.

On the other hand, when there is the VM 30 for which the definition data has been updated (step S93: Yes route), the definition management unit 501 executes the following processing. Specifically, the definition management unit 501 transmits, to the VM 30 for which the definition data has been updated, a request to restart transfer of execution logs to the monitoring unit 302 (step S95).

The definition management unit 501 sets "False" in the "updating definition" column in the monitoring VM table for the VM 30 for which the definition data has been updated (step S97) . In step S97, the definition management unit 501 transmits a request to update the monitoring VM table to the information processing apparatus 1, and the information processing apparatus 1 updates the monitoring VM table in response to the request to update the monitoring VM table.

The definition management unit 501 determines whether or not a record of the VM 30 for which the "updating definition" column is set as "True" exists in the monitoring VM table (step S99).

When the record of the VM30 for which the "updating definition" column is set as "True" exists in the monitoring VM table (step S99: Yes route), the processing returns to step S91. On the other hand, when the record of the VM 30 for which the "updating definition" column is set as "True" does not exist in the monitoring VM table (step S99: No route), the processing ends.

By executing the aforementioned processing, transfer of execution logs to the monitoring unit 302 is resumed only when definition data is updated.

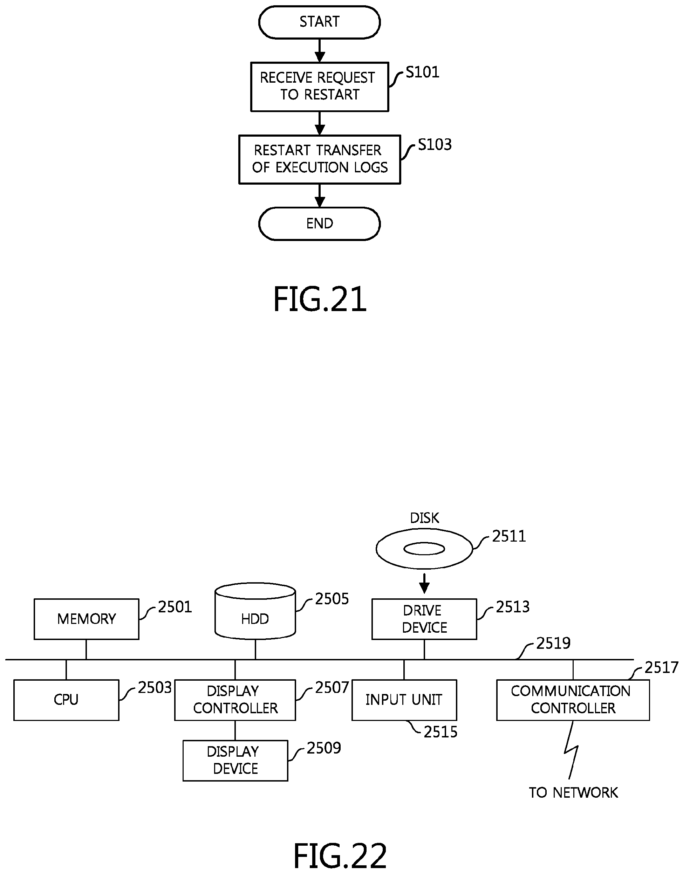

With reference to Fig. 21, processing executed by the monitoring apparatus 3 that has received the request to restart transfer of execution logs will be described.

The log transfer unit 301 of the VM 30 in the monitoring apparatus 3 receives the request to restart, which was transmitted by the management apparatus 5 in step S95 (Fig. 21: step S101).

The log transfer unit 301 restart transferring execution logs to the monitoring unit 302 (step S103). Then, the processing ends.

By executing the aforementioned processing, determination is made as to whether or not the detection condition is satisfied for new execution logs received from the load balancer 101, using the updated definition data.

Although the embodiments of this invention were explained above, this invention is not limited to those. For example, the functional block configuration of the information processing apparatus 1, the monitoring apparatuses 3 and the management apparatus 5, which are explained above, does not always correspond to actual program module configuration.

Moreover, the aforementioned configuration of each table is a mere example, and may be changed. Furthermore, as for the processing flow, as long as the processing results do not change, the turns of the steps may be exchanged or the steps may be executed in parallel.

Moreover, a GUID may be attached to an end of the execution log.

Moreover, the number of information processing apparatuses 1 may be two or more.

In addition, the aforementioned management apparatus 5 is a computer apparatus as illustrated in Fig. 22. That is, a memory 2501, a CPU 2503 (central processing unit), a HDD (hard disk drive) 2505, a display controller 2507 connected to a display device 2509, a drive device 2513 for a removable disk 2511, an input unit 2515, and a communication controller 2517 for connection with a network are connected through a bus 2519 as illustrated in Fig. 22. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform predetermined operations. Moreover, intermediate processing data is stored in the memory 2501, and if necessary, it is stored in the HDD 2505. In these embodiments of this invention, the application program to realize the aforementioned processing is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer apparatus as stated above, the hardware such as the CPU 2503 and the memory 2501, the OS and the application programs systematically cooperate with each other, so that various functions as described above in details are realized.

The aforementioned embodiments are summarized as follows.

A log monitoring method related to this embodiment includes: (A) receiving identification information of a user among a plurality of users and execution log data for software associated with the user; (B) obtaining a detection condition associated with the received identification information from a storage that stores detection conditions each of whichisassociated withidentificationinformation of a user; (C) determining whether the received execution log data satisfies the obtained detection condition; and (D) outputting a result of the determining.

It becomes possible to enable to monitor execution logs of software in a scalable form in a system where plural users use the software.

Moreover, the log monitoring method may further include (E) returning, before the determining, the received execution log data to a load balancer that transmitted the received identification information and the received execution log data, upon detecting that a state of a process for the determining is an abnormal state.

Allocation is performed from the load balancer to another process, and it becomes possible to cause the process in a normal state to execute the determining.

Moreover, the log monitoring method may further include (F) stopping execution of the determining until update of a first detection condition stored in the storage is completed, upon receiving a request to update the first detection condition.

It becomes possible to prevent the determining from being executed using the first detection condition before the update.

Moreover, the log monitoring method may further include: (G) updating a second detection condition stored in the storage, upon receiving a request to update the second detection condition after stopping receiving identification information of a user and execution log data for software associated with the user; and (H) executing, based on the updated second detection condition, the determining for execution log data which was received before the stopping and for which the determining based on the second detection condition before the updating has not been executed.

It becomes possible to prevent the determining from being performed using the second detection condition before the updating.

Moreover, the log monitoring method may further include (I) returning, to the load balancer, a predetermined amount of execution log data received in a latest period, identification information of the user, and information that represents that the predetermined amount of execution log data and the identification information of the user have already been outputted to the process for the determining, upon detecting that the state of the process for the determining is the abnormal state.

It becomes possible to execute the determining by another process with respect to execution logs for which the determining may not have been executed.

Moreover, the receiving may include (a1) receiving information that represents that a predetermined amount of execution log data and the identification information of the user have already been outputted to a process for the determining, and the outputting may include (d1) outputting information that suggests the result of the determining has already been outputted.

It is possible to recognize that the results of the determination processing are outputted in duplicate.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A log monitoring method, comprising:
receiving identification information of a user among a plurality of users and execution log data for software associated with the user;
obtaining a detection condition associated with the received identification information from a storage that stores detection conditions each of whichisassociated withidentificationinformation of a user;
determining whether the received execution log data satisfies the obtained detection condition; and
outputting a result of the determining.

2. The log monitoring method as set forth in claim 1, wherein the process further comprises returning, before the determining, the received execution log data to a load balancer that transmitted the received identification information and the received execution log data, upon detecting that a state of a process for the determining is an abnormal state.

3. The log monitoring method as set forth in claim 1, wherein the process further comprises stopping execution of the determining until update of a first detection condition stored in the storage is completed, upon receiving a request to update the first detection condition.

4. The log monitoring method as set forth in claim 1, wherein the process further comprises:
updating a second detection condition stored in the storage, upon receiving a request to update the second detection condition after stopping receiving identification information of a user and execution log data for software associated with the user; and
executing, based on the updated second detection condition, the determining for execution log data which was received before the stopping and for which the determining based on the second detection condition before the updating has not been executed.

5. The log monitoring method as set forth in claim 2, wherein the process further comprises returning, to the load balancer, a predetermined amount of execution log data received in a latest period, identification information of the user, and information that represents that the predetermined amount of execution log data and the identification information of the user have already been outputted to the process for the determining, upon detecting that the state of the process for the determining is the abnormal state.

6. The log monitoring method as set forth in claim 1, wherein the receiving comprises receiving information that represents that a predetermined amount of execution log data and the identification information of the user have already been outputted to a process for the determining, and the outputting comprises outputting information that suggests the result of the determining has already been outputted.

7. A program for causing a computer to execute the log monitoring method as set forth in any one of claims 1 to 6.

8. A log monitoring apparatus, comprising:
a receiver that receives identification information of a user among a plurality of users and execution log data for software associated with the user;
an acquisition unit that obtains a detection condition associated with the received identification information from a storage that stores detection conditions each of which is associated with identification information of a user;
a determination unit that determines whether the received execution log data satisfies the obtained detection condition; and
an output unit that outputs a result of the determining.
